(19) Europäisches Patentamt
European Patent Office
Office européen des brevets

(11) **EP 4 485 356 A1**

(12) **EUROPEAN PATENT APPLICATION**
published in accordance with Art. 153(4) EPC

(43) Date of publication:
**01.01.2025 Bulletin 2025/01**

(21) Application number: **23759764.6**

(22) Date of filing: **13.02.2023**

(51) International Patent Classification (IPC):
***G06T 7/64*** (2017.01)    ***G06T 7/70*** (2017.01)

(52) Cooperative Patent Classification (CPC):
**G06T 7/64; G06T 7/70**

(86) International application number:
**PCT/JP2023/004859**

(87) International publication number:
**WO 2023/162761 (31.08.2023 Gazette 2023/35)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **24.02.2022 JP 2022027286**

(71) Applicant: **Nuvoton Technology Corporation
Japan
Nagaokakyo City, Kyoto 617-8520 (JP)**

(72) Inventors:
• **UEDA, Kei**
  **Nagaokakyo City, Kyoto 617-8520 (JP)**
• **KANEMARU, Masaki**
  **Nagaokakyo City, Kyoto 617-8520 (JP)**
• **OKUYAMA, Tetsuro**
  **Nagaokakyo City, Kyoto 617-8520 (JP)**
• **KAWAI, Yoshinao**
  **Nagaokakyo City, Kyoto 617-8520 (JP)**

(74) Representative: **Novagraaf International SA
Chemin de l'Echo 3
1213 Onex, Geneva (CH)**

(54) **OBSTACLE DETECTION METHOD, PROGRAM, AND OBSTACLE DETECTION DEVICE**

(57)    An obstruction detection method includes: determining an exclusion depth pixel; and detecting an obstruction, based on depth pixel(s) other than the exclusion depth pixel. The determining includes performing the following: calculating an average value related to a depth pixel, based on the depth-pixel value of the depth pixel and the depth-pixel value of each of first surrounding depth pixels, and associating the average value with the depth pixel (S103); calculating a normal line, based on the average value associated with the depth pixel and an average value associated with each of second surrounding depth pixels (104); determining whether an angle formed by the normal line calculated and the normal line of a predetermined reference plane is smaller than or equal to a predetermined angle (S106); and determining the depth pixel as the exclusion depth pixel when the angle is determined to be smaller than or equal to the predetermined angle (S107).

FIG. 3B

## Description

[Technical Field]

The present disclosure relates to an obstruction detection method, a program, and an obstruction detection device for detecting an obstruction.

[Background Art]

Patent Literature (PTL) 1 discloses a technique for generating a drivable route by determining a locally flat voxel on the basis of a normal vector associated with a voxel.

[Citation List]

[Patent Literature]

PTL 1: Japanese Unexamined Patent Application Publication (Translation of PCT Application) No. 2020-524330

[Summary of Invention]

[Technical Problem]

However, in the technique disclosed in PTL 1, regarding an object group having an irregular plane that is generally flat but partially uneven, an uneven portion of the irregular plane may be determined to be an obstruction, which may lead to the determination that the plane is undrivable.
In view of this, the present disclosure provides, for example, an obstruction detection method capable of accurately detecting an obstruction in an object group having an irregular plane that is generally flat but partially uneven.

[Solution to Problem]

An obstruction detection method according to the present disclosure is an obstruction detection method for detecting an obstruction. The obstruction detection method includes: determining an exclusion depth pixel to be excluded from obstruction candidate pixels among the plurality of depth pixels of a depth image obtained by sensing, using a depth sensor, an object group having an irregular plane; and detecting an obstruction, based on one or more depth pixels other than the exclusion depth pixel among the plurality of depth pixels. The determining includes performing, for each of the plurality of depth pixels, the following: processing (i) for calculating an average value related to the depth pixel, based on the depth-pixel value of the depth pixel and the depth-pixel value of each of a plurality of first surrounding depth pixels within a first pixel number from the depth pixel, and associating the average value with the depth pixel, the first pixel number indicating a predetermined number of pixels; processing (ii) for calculating a normal line, based on the average value associated with the depth pixel and an average value associated with each of a plurality of second surrounding depth pixels within a second pixel number from the depth pixel, the second pixel number indicating a predetermined number of pixels; processing (iii) for determining whether an angle formed by the normal line calculated and the normal line of a predetermined reference plane is smaller than or equal to a predetermined angle; and processing (iv) for determining the depth pixel as the exclusion depth pixel when the angle is determined to be smaller than or equal to the predetermined angle.
A program according to the present disclosure is a program for causing a computer to execute the above obstruction detection method.
An obstruction detection device according to the present disclosure is an obstruction detection device that detects an obstruction. The obstruction detection device includes: a determiner that determines an exclusion depth pixel to be excluded from obstruction candidate pixels among the plurality of depth pixels of a depth image obtained by sensing, using a depth sensor, an object group having an irregular plane; and a detector that detects an obstruction, based on one or more remaining depth pixels after the exclusion depth pixel has been excluded from the plurality of depth pixels. The determiner performs, for each of the plurality of depth pixels, the following: processing (i) for calculating an average value related to the depth pixel, based on the depth-pixel value of the depth pixel and the depth-pixel value of each of a plurality of surrounding depth pixels within a predetermined number of pixels from the depth pixel, and associating the average value with the depth pixel; processing (ii) for calculating a normal line, based on the average value associated with the depth pixel and an average value associated with each of a plurality of surrounding depth pixels within a predetermined number of pixels from the depth pixel; processing (iii) for determining whether an angle formed by the normal line calculated and the normal line of a predetermined reference plane is smaller than or equal to a predetermined angle; and processing (iv) for determining the depth pixel as the exclusion depth pixel when the angle is determined to be smaller than or equal to the predetermined angle.

It should be noted that these general or specific aspects may be embodied as a system, a method, an integrated circuit, a computer program, or a computer-readable recording medium such as a CD-ROM or may be embodied as any combination of the system, the method, the integrated circuit, the computer program, and the recording medium.

[Advantageous Effects of Invention]

By using, for example, an obstruction detection method according to one aspect of the present disclosure, it is possible to accurately detect an obstruction in an object group having an irregular plane that is generally flat but partially uneven.

[Brief Description of Drawings]

[FIG. 1]

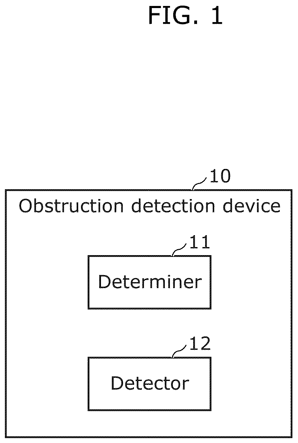

FIG. 1 is a block diagram illustrating an example of an obstruction detection device according to an embodiment.
[FIG. 2]

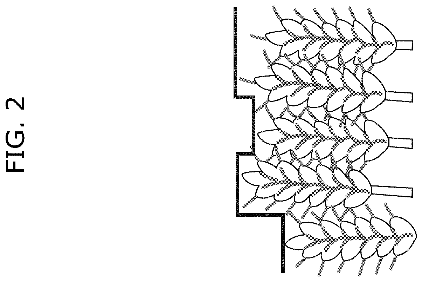

FIG. 2 is an illustration of an irregular plane.
[FIG. 3A]

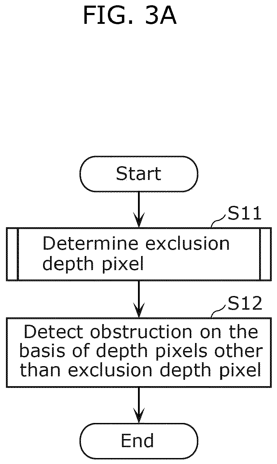

FIG. 3A is a flowchart illustrating an example of an obstruction detection method according to the embodiment.
[FIG. 3B]

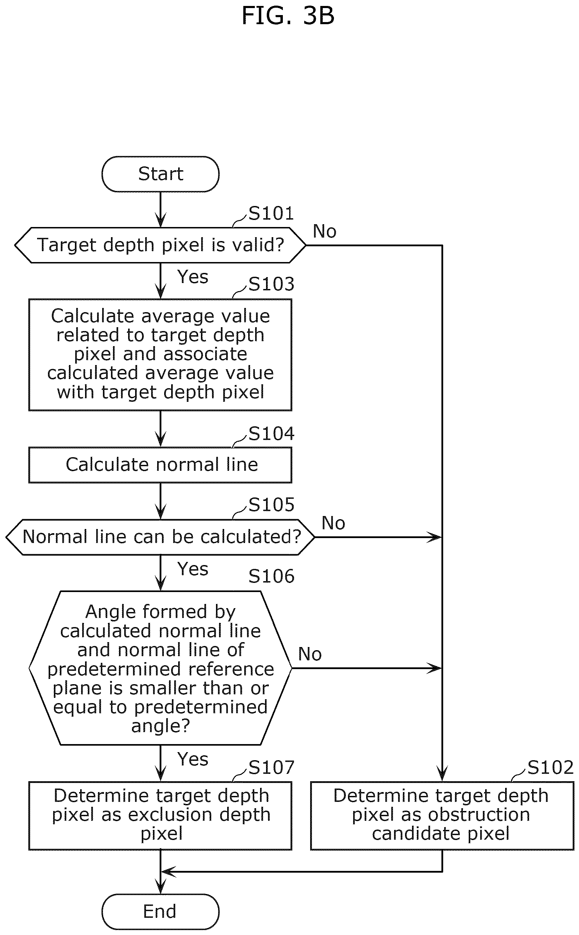

FIG. 3B is a flowchart illustrating an example of a determination step for determining an exclusion depth pixel according to the em bod iment.
[FIG. 4]

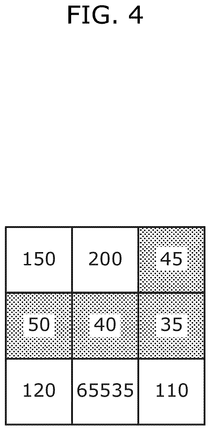

FIG. 4 is an illustration for explaining a method of calculating an average depth-pixel value.
[FIG. 5]

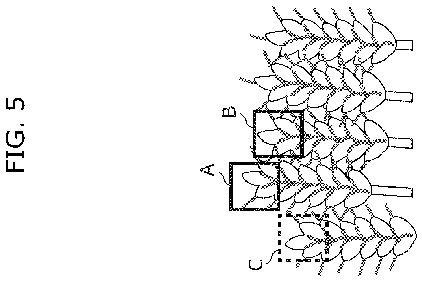

FIG. 5 schematically illustrates a depth pixel used in calculation of the average depth-pixel value and a depth pixel not used in the calculation of the average depth-pixel value.
[FIG. 6]

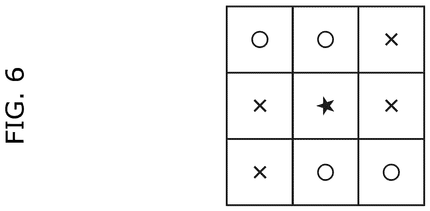

FIG. 6 illustrates an example of valid second surrounding depth pixels used in calculation of a normal-line calculation plane.

[Description of Embodiments]

(Circumstances Leading to One Aspect of the Present Disclosure)

When driving, for example, a farm machine in a place such as an agricultural field, it is necessary to identify a group of upward growing crops as a non-obstruction and detect, as an obstruction, a person who is working amongst the group of upward growing crops and whose upper body is protruding from the edge plane of the group of upward growing crops. For instance, when treating a certain height as a threshold and detecting an object of a height greater than or equal to the threshold as an obstruction, if the threshold is set too high, the person may not be able to be detected, which may lead to a serious accident. Meanwhile, if the threshold is set too low, many upward growing crops may be detected as obstructions, which may decrease the work efficiency due to the frequent stoppages of the farm machine. Thus, when the threshold is set in terms of the height, many detection failures or error detections may occur.

In contrast, by using the technique disclosed in PTL 1, when the edge plane of the group of upward growing crops is flat, the edge plane of the group of upward growing crops can be determined as a drivable road surface, that is, the group of upward growing crops can be determined as a non-obstruction. In addition, if there is a person whose upper body is protruding from the edge plane of the group of upward growing crops, an area where the person is present is not flat, which makes it possible to identify the person as an obstruction. However, the heights of the upward growing crops are not the same, and the edge plane of the group of upward growing crops is an irregular plane that is generally flat but partially uneven. Thus, even if a person is not present amongst the group of upward growing crops, an uneven portion of the edge plane may be detected as an obstruction.

Hereinafter, for example, an obstruction detection method capable of accurately detecting an obstruction in an object group having an irregular plane that is generally flat but partially uneven is described.

An obstruction detection method according to one aspect of the present disclosure is an obstruction detection method for detecting an obstruction. The obstruction detection method includes: determining an exclusion depth pixel to be excluded from obstruction candidate pixels among the plurality of depth pixels of a depth image obtained by sensing, using a depth sensor, an object group having an irregular plane; and detecting an obstruction, based on one or more depth pixels other than the exclusion depth pixel among the plurality of depth pixels. The determining includes performing, for each of the plurality of depth pixels, the following: processing (i) for calculating an average value related to the depth pixel, based on the depth-pixel value of the depth pixel and the depth-pixel value of each of a plurality of first surrounding depth pixels within a first pixel number from the depth pixel, and associating the average value with the depth pixel, the first pixel number indicating a predetermined number of pixels; processing (ii) for calculating a normal line, based on the average value associated with the depth pixel and an average value associated with each of a plurality of second surrounding depth pixels within a second pixel number from the depth pixel, the second pixel number indicating a predetermined number of pixels; processing (iii) for determining whether an angle formed by the normal line calculated and the normal line of a predetermined reference plane is smaller than or equal to a predetermined angle; and processing (iv) for determining the depth pixel as the exclusion depth pixel when the angle is determined to be smaller than or equal to the predetermined angle.

Thus, when determining an exclusion depth pixel to be excluded from the obstruction candidate pixels, an average value related to each of the plurality of depth pixels is calculated using the depth-pixel value of the depth pixel and the depth-pixel values of the plurality of first surrounding depth pixels of the depth pixel, and the normal line for determining the exclusion depth pixel is calculated using the average value. That is, values related to depth pixels corresponding to an uneven portion (e.g., the depth-pixel value or the coordinate value of the depth pixel) are averaged, which brings the uneven portion closer to being flat (in other words, the angle formed by the calculated normal line and the normal line of the predetermined reference plane becomes smaller than or equal to the predetermined angle). Thus, it is possible to exclude the uneven portion from the obstruction candidate pixels. It should be noted that there is a large difference between values related to depth pixels corresponding to a spot where, for example, a person is present and values related to depth pixels corresponding to a spot where, for example, a person is not present. As such, even if the values related to the depth pixels corresponding to the spot where, for example, the person is present are averaged, the averaged value is likely to be an outlier, and the angle formed by the calculated normal line and the normal line of the predetermined reference plane is less likely to be an angle smaller than or equal to the predetermined angle. Thus, it is possible to avoid excluding the depth pixels corresponding to the spot where, for example, the person is present from the obstruction candidate pixels. Accordingly, it is possible to accurately detect an obstruction in the object group having an irregular plane that is generally flat but partially uneven.

For instance, in the processing (i), the average depth-pixel value of the depth-pixel value of the depth pixel and the depth-pixel value of each of the plurality of first surrounding depth pixels within the first pixel number from the depth pixel may be calculated, and the average depth-pixel value may be associated with the depth pixel, and in the processing (ii), the normal line may be calculated based on the average depth-pixel value associated with the depth pixel and an average depth-pixel value associated with each of the plurality of second surrounding depth pixels within the second pixel number from the depth pixel.

Thus, when determining an exclusion depth pixel to be excluded from the obstruction candidate pixels, the average depth-pixel value of the depth-pixel value of a target depth pixel (each of the plurality of depth pixels is treated as the target depth pixel) and the depth-pixel values of the plurality of first surrounding depth pixels of the target depth pixel is calculated, and the normal line for determining the exclusion depth pixel is calculated. That is, the depth-pixel values of depth pixels corresponding to the uneven portion are averaged, which brings the uneven portion closer to being flat (in other words, the angle formed by the calculated normal line and the normal line of the predetermined reference plane becomes smaller than or equal to the predetermined angle). Thus, it is possible to exclude the uneven portion from the obstruction candidate pixels. It should be noted that there is a large difference between the depth-pixel values of depth pixels corresponding to a spot where, for example, a person is present and the depth-pixel values of depth pixels corresponding to a spot where, for example, a person is not present. As such, even if the depth-pixel values of the depth pixels corresponding to the spot where, for example, the person is present are averaged, the averaged value is likely to be an outlier, and the angle formed by the calculated normal line and the normal line of the predetermined reference plane is less likely to be an angle smaller than or equal to the predetermined angle. Thus, it is possible to avoid excluding the depth pixels corresponding to the spot where, for example, the person is present from the obstruction candidate pixels. Accordingly, it is possible to accurately detect an obstruction in the object group having an irregular plane that is generally flat but partially uneven.

For instance, in the processing (i), the average depth-pixel value of the depth-pixel value of the depth pixel and the depth-pixel value of each of one or more first surrounding depth pixels in which a difference in the depth-pixel value from the depth pixel is lower than or equal to a predetermined threshold among the plurality of first surrounding depth pixels may be calculated, and the average depth-pixel value may be associated with the depth pixel.

Thus, when calculating the average depth-pixel value, depth pixels between which the difference in the depth-pixel value is small are averaged. As such, it is possible to perform the averaging processing for only the portion whose unevenness is small to some extent, which can suppress the average depth-pixel value from being affected by an outlier.

For instance, in the processing (ii), the normal line may be calculated based on the average depth-pixel value associated with the depth pixel and an average depth-pixel value associated with each of valid second surrounding depth pixels among the plurality of second surrounding depth pixels. For instance, when the plurality of second surrounding depth pixels do not include a valid second surrounding depth pixel or include one valid second surrounding depth pixel, the depth pixel may be determined as an obstruction candidate pixel.

Thus, when the plurality of second surrounding depth pixels of a depth pixel do not include a valid second surrounding depth pixel or include one valid second surrounding depth pixel, a normal line cannot be calculated. As such, the depth pixel is determined as an obstruction candidate pixel.

For instance, in the processing (i), the average coordinate value of a coordinate value out of three-dimensional coordinate values obtained through point cloud transformation of the depth-pixel value of the depth pixel and a coordinate value out of three-dimensional coordinate values obtained through the point cloud transformation of the depth-pixel value of each of the plurality of first surrounding depth pixels within the first pixel number from the depth pixel may be calculated, and the average coordinate value may be associated with the depth pixel, and in the processing (ii), the normal line may be calculated based on the average coordinate value associated with the depth pixel and an average coordinate value associated with each of the plurality of second surrounding depth pixels within the second pixel number from the depth pixel.

Thus, when determining an exclusion depth pixel to be excluded from the obstruction candidate pixels, the average coordinate value of the coordinate value of a target depth pixel (each of the plurality of depth pixels is treated as the target depth pixel) and the coordinate values (e.g., coordinate values corresponding to heights) of the plurality of first surrounding depth pixels of the target depth pixel is calculated, and the normal line for determining the exclusion depth pixel is calculated using the calculated average coordinate value. That is, the coordinate values of depth pixels corresponding to the uneven portion are averaged, which brings the uneven portion closer to being flat (in other words, the angle formed by the calculated normal line and the normal line of the predetermined reference plane becomes smaller than or equal to the predetermined angle). Thus, it is possible to exclude the uneven portion from the obstruction candidate pixels. It should be noted that there is a large difference between the coordinate values of depth pixels corresponding to a spot where, for example, a person is present and the coordinate values of depth pixels corresponding to a spot where, for example, a person is not present. As such, even if the coordinate values of the depth pixels corresponding to the spot where, for example, the person is present are averaged, the averaged value is likely to be an outlier, and the angle formed by the calculated normal line and the normal line of the predetermined reference plane is less likely to be an angle smaller than or equal to the predetermined angle. Thus, it is possible to avoid excluding the depth pixels corresponding to the spot where, for example, the person is present from the obstruction candidate pixels. Accordingly, it is possible to accurately detect an obstruction in the object group having an irregular plane that is generally flat but partially uneven.

For instance, in the processing (i), the average coordinate value of the coordinate value of the depth pixel and the coordinate value of each of one or more first surrounding depth pixels in which a difference in the coordinate value from the depth pixel is lower than or equal to a predetermined threshold among the plurality of first surrounding depth pixels may be calculated, and the average coordinate value may be associated with the depth pixel.

Thus, when calculating the average coordinate value, depth pixels between which the difference in the coordinate value is small are averaged. As such, it is possible to perform the averaging processing for only the portion whose unevenness is small to some extent, which can suppress the average coordinate value from being affected by an outlier.

For instance, in the processing (ii), the normal line may be calculated based on the average coordinate value associated with the depth pixel and an average coordinate value associated with each of valid second surrounding depth pixels among the plurality of second surrounding depth pixels. For instance, when the plurality of second surrounding depth pixels do not include a valid second surrounding depth pixel or include one valid second surrounding depth pixel, the depth pixel may be determined as an obstruction candidate pixel.

Thus, when the plurality of second surrounding depth pixels of a depth pixel do not include a valid second surrounding depth pixel or include one valid second surrounding depth pixel, a normal line cannot be calculated. As such, the depth pixel is determined as an obstruction candidate pixel.

For instance, the object group may have the irregular plane which includes an uneven portion formed by an edge of a group of upward growing crops.

Thus, it is possible to accurately detect an obstruction on the irregular plane including the uneven portion formed by the edge of the group of upward growing crops.

For instance, the normal line of the predetermined reference plane may be the normal line of a ground on which the group of upward growing crops grow. For instance, the obstruction detection method may further include: calculating the normal line of the ground, based on an average value associated with the depth pixel corresponding to the ground and the average value associated with each of the plurality of second surrounding depth pixels, or obtaining the normal line of the ground by using a sensor capable of obtaining the normal line of the ground.

Thus, it is possible to calculate or obtain the normal line of the ground on which the group of upward growing crops grow.

A program according to another aspect of the present disclosure is a program for causing a computer to execute the above obstruction detection method.

Thus, it is possible to provide the program capable of accurately detecting an obstruction in the object group having an irregular plane that is generally flat but partially uneven.

An obstruction detection device according to still another aspect of the present disclosure is an obstruction detection device that detects an obstruction. The obstruction detection device includes: a determiner that determines an exclusion depth pixel to be excluded from obstruction candidate pixels among the plurality of depth pixels of a depth image obtained by sensing, using a depth sensor, an object group having an irregular plane; and a detector that detects an obstruction, based on one or more remaining depth pixels after the exclusion depth pixel has been excluded from the plurality of depth pixels, in which the determiner performs, for each of the plurality of depth pixels, the following: processing (i) for calculating an average value related to the depth pixel, based on the depth-pixel value of the depth pixel and the depth-pixel value of each of a plurality of surrounding depth pixels within a predetermined number of pixels from the depth pixel, and associating the average value with the depth pixel; processing (ii) for calculating a normal line, based on the average value associated with the depth pixel and an average value associated with each of a plurality of surrounding depth pixels within a predetermined number of pixels from the depth pixel; processing (iii) for determining whether an angle formed by the normal line calculated and the normal line of a predetermined reference plane is smaller than or equal to a predetermined angle; and processing (iv) for determining the depth pixel as the exclusion depth pixel when the angle is determined to be smaller than or equal to the predetermined angle.

Thus, it is possible to provide the obstruction detection device capable of accurately detecting an obstruction in the object group having an irregular plane that is generally flat but partially uneven.

An embodiment is described below in detail with reference to the drawings.

It should be noted that the embodiments described below each indicate a general or specific example. The numerical values, shapes, materials, constituent elements, arrangements and connections of the constituent elements, steps, order of steps, and other details indicated in the embodiment described below are examples, and therefore do not intend to limit the present disclosure.

[Embodiment]

Hereinafter, an obstruction detection device and an obstruction detection method according to an embodiment are described.

FIG. 1 is a block diagram illustrating an example of obstruction detection device 10 according to an embodiment.

Obstruction detection device 10 is a device for detecting an obstruction. For instance, obstruction detection device 10 is included in, for example, a farm machine to be driven in an agricultural field, and detects, for example, a person working amongst a group of upward growing crops in the agricultural field as an obstruction. In this case, the obstruction to be detected is not limited to a person and may be another farm machine. The upward growing crops are, for example, gramineous crops such as rice, wheat, and millet. It should be noted that the agricultural field is an example of a place in which to detect an obstruction. For instance, a place in which to detect an obstruction may be a construction site. For instance, obstruction detection device 10 may be included in, for example, a construction machine to be driven in a construction site, and detect, for example, a person working in the construction site as an obstruction. In this case, the obstruction to be detected is not limited to a person and may be another construction machine.

Obstruction detection device 10 includes determiner 11 and detector 12 as functional constituent elements. Obstruction detection device 10 is a computer including a processor and memory. Examples of the memory include read only memory (ROM) and random access memory (RAM), and the memory is capable of storing a program to be executed by the processor. Determiner 11 and detector 12 are embodied as, for example, the processor that executes the program stored in the memory.

Determiner 11 determines an exclusion depth pixel to be excluded from obstruction candidate pixels among the plurality of depth pixels of a depth image obtained by sensing, using a depth sensor, an object group having an irregular plane. The depth sensor is included in, for example, a farm machine or a construction machine. The depth sensor may be a stereo camera depth sensor or time of flight (ToF) depth sensor. The plurality of depth pixels of the depth image obtained by the depth sensor include not only information indicating positions in the depth image but also information indicating depth-pixel values (that is, depths indicating distances in depth). That is, a depth pixel can be considered a 3D point. Hereinafter, the object group is described as having an irregular plane including an uneven portion which is formed by the edge of the group of upward growing crops. However, this is just an example, and the object group is not limited to the object group having the irregular plane including the uneven portion which is formed by the edge of the group of upward growing crops. For instance, the depth sensor is provided on, for example, the ceiling of the farm machine or the construction machine, and is capable of sensing the edge plane (irregular plane) of the group of upward growing crops from diagonally above.

Here, an example of the irregular plane is described with reference to FIG. 2.

FIG. 2 is an illustration of the irregular plane. FIG. 2 illustrates a cross section of the irregular plane.

As illustrated in FIG. 2, the upward growing crops of the group of upward growing crops do not have the same height and are partially uneven in height. Meanwhile, the upward growing crops of the group of upward growing crops seem to have approximately the same height when the group of upward growing crops is seen from a distance. Here, a plane that is generally flat but partially uneven, as with the edge plane of the group of upward growing crops, is referred to as the irregular plane.

In FIG. 1, detector 12 detects an obstruction on the basis of the remaining depth pixels after one or more exclusion depth pixel have been excluded from the plurality of depth pixels. For instance, detector 12 outputs a detection result to another device (e.g., a device that controls, for example, the farm machine or the construction machine).

Details of the operation of determiner 11 and the operation of detector 12 are described later.

Then, an obstruction detection method according to the embodiment is described with reference to FIG. 3A.

FIG. 3A is a flowchart illustrating an example of the obstruction detection method according to the embodiment. It should be noted that since the obstruction detection method is a method performed by obstruction detection device 10, FIG. 3A is also an example of a flowchart illustrating the operation of obstruction detection device 10.

First, determiner 11 determines an exclusion depth pixel to be excluded from obstruction candidate pixels among the plurality of depth pixels of a depth image obtained by sensing, using the depth sensor, an object group having an irregular plane (step S11: determination step). Here, the details of step S11 (the determination step), that is, the details of the operation of determiner 11 are described with reference to FIG. 3B.

FIG. 3B is a flowchart illustrating an example of the determination step for determining an exclusion depth pixel according to the embodiment.

Determiner 11 performs processing corresponding to steps S101 to S107 in FIG. 3B for each of the plurality of depth pixels in the depth image. Hereinafter, a target depth pixel for processing among the plurality of depth pixels is described as a target depth pixel.

First, determiner 11 determines whether the target depth pixel is a valid depth pixel (step S101). An invalid depth pixel is a depth pixel having an anomalous depth-pixel value due to the effects of noise and/or the sunlight. It is not possible to identify whether an obstruction is present at the position corresponding to such an invalid depth pixel. Since the obstruction may be present at the position, when the target depth pixel is not a valid depth pixel (No in step S101), determiner 11 determines the target depth pixel as an obstruction candidate pixel (step S102).

When the target depth pixel is a valid depth pixel (Yes in step S101), determiner 11 calculates an average value related to the target depth pixel on the basis of the depth-pixel value of the target depth pixel and the depth-pixel values of a plurality of first surrounding depth pixels within a first pixel number (indicating the number of pixels) from the target depth pixel, and associates the calculated average value with the depth pixel (step S103). For instance, determiner 11 calculates the average depth-pixel value of the depth-pixel value of the target depth pixel and the depth-pixel values of the plurality of first surrounding depth pixels within the first pixel number from the target depth pixel, and associates the calculated average depth-pixel value with the target depth pixel. For instance, determiner 11 calculates the average depth-pixel value of the depth-pixel value of the target depth pixel and the depth-pixel value of each of one or more first surrounding depth pixels in which a difference in the depth-pixel value from the target depth pixel is lower than or equal to a predetermined threshold among the plurality of first surrounding depth pixels, and associates the calculated average depth-pixel value with the target depth pixel. Here, a method of calculating the average depth-pixel value is described with reference to FIG. 4.

FIG. 4 is an illustration for explaining a method of calculating the average depth-pixel value. FIG. 4 illustrates a target depth pixel (the spot marked with the number 40) and a plurality of first surrounding depth pixels within the first pixel number from the target depth pixel (the eight spots surrounding the spot marked with the number 40). Each numerical value indicates a depth-pixel value. Here, the first pixel number is set to one. That is, the plurality of first surrounding depth pixels are the depth pixels adjacent to the target depth pixel. It should be noted that without being limited to one, the first pixel number may be appropriately set according to the type of the object group (e.g., the type of the upward growing crops).

In FIG. 4, among the plurality of first surrounding depth pixels, one or more first surrounding depth pixels in which a difference in the depth-pixel value from the target depth pixel is lower than or equal to the predetermined threshold are dot hatched. For instance, the predetermined threshold is set to 10. One or more first surrounding depth pixels in which a difference in the depth-pixel value from the target depth pixel (having a depth-pixel value of 40) is at most 10 are, here, the depth pixel, to the left of the target depth pixel, having a depth-pixel value of 50, the depth pixel, to the right of the target depth pixel, having a depth-pixel value of 35, and the depth pixel, to the upper right of the target depth pixel, having a depth-pixel value of 45. It should be noted that without being limited to 10, the predetermined threshold may be appropriately set according to, for example, the type of the object group (e.g., the type of the upward growing crops). The average depth-pixel value is calculated as a result of calculation of the average value of the depth-pixel values. For instance, in the example illustrated in FIG. 4, the average depth-pixel value is calculated by (40 + 50 + 35 + 45)/4 = 39, where 40 is the depth-pixel value of the target depth pixel, and 50, 35, and 45 are the depth-pixel values of the three first surrounding depth pixels. The calculated average depth-pixel value is associated with the target depth pixel.

FIG. 5 schematically illustrates a depth pixel used in calculation of the average depth-pixel value and a depth pixel not used in the calculation of the average depth-pixel value. In FIG. 5, the target depth pixel is defined as depth pixel A, the depth pixel used in the calculation of the average depth-pixel value is defined as depth pixel B, and the depth pixel not used in the calculation of the average depth-pixel value is defined as depth pixel C. The difference in height between the upward growing crop corresponding to depth pixel A and the upward growing crop corresponding to depth pixel B is small, whereas the difference in height between the upward growing crop corresponding to depth pixel A and the upward growing crop corresponding to depth pixel C is large. This means that depth pixel B has a small difference in the depth-pixel value from depth pixel A, and depth pixel C has a large difference in the depth-pixel value from depth pixel A.

As illustrated in FIG. 5, for the small difference in the depth-pixel value from depth pixel A, depth pixel B is used in averaging processing. Meanwhile, for the large difference in the depth-pixel value from depth pixel A, depth pixel C is excluded from the averaging processing. Thus, when calculating the average depth-pixel value, the depth pixels between which the difference in the depth-pixel value is small are averaged. As such, it is possible to perform the averaging processing for only the portion whose unevenness is small to some extent, which can suppress the average depth-pixel value from being affected by an outlier (e.g., the depth-pixel value of depth pixel C).

Likewise, an average depth-pixel value is calculated for each of the plurality of depth pixels in the depth image and associated with the depth pixel. For instance, the depth pixel having a depth-pixel value of 35 illustrated in FIG. 4 is treated as the target depth pixel. Then, the average depth-pixel value of the depth pixel value of the target depth pixel, depth-pixel values of 40 and 45 illustrated in FIG. 4, and the depth-pixel value of each of one or more first surrounding depth pixels in which a difference in the depth-pixel value from the target depth pixel is lower than or equal to the predetermined threshold (e.g., 10) among the depth pixels (not illustrated) to the right, to the upper right, and to the lower right of the target depth pixel is calculated. The calculated average depth-pixel value is associated with the target depth pixel.

In FIG. 3B, determiner 11 calculates a normal line on the basis of the average value associated with the target depth pixel and an average value associated with each of a plurality of second surrounding depth pixels within a second pixel number (indicating the number of pixels) from the target depth pixel (step S104). For instance, determiner 11 calculates the normal line on the basis of the average depth-pixel value associated with the target depth pixel and an average depth-pixel value associated with each of the plurality of second surrounding depth pixels within the second pixel number from the target depth pixel. The processing in step S103 is performed for each of the plurality of second surrounding depth pixels as with the target depth pixel, and a calculated average depth-pixel value is associated with the second surrounding depth pixel. For instance, determiner 11 calculates a normal-line calculation plane on the basis of the average depth-pixel value associated with the target depth pixel and an average depth-pixel value associated with each of valid second surrounding depth pixels among the plurality of second surrounding depth pixels, and calculates the normal line of the calculated normal-line calculation plane. Although details are described later, the normal line is used in making a determination as to whether to determine the target depth pixel as an exclusion depth pixel. Here, an example of the valid second surrounding depth pixels is illustrated in FIG. 6.

FIG. 6 illustrates an example of valid second surrounding depth pixels used in calculation of a normal-line calculation plane. The spot marked with a star indicates a target depth pixel, the spots each marked with a circle indicate valid second surrounding depth pixels, and the spots each marked with a cross indicate invalid second surrounding depth pixels. Here, the second pixel number is set to one, that is, the plurality of second surrounding depth pixels are set to the depth pixels adjacent to the target depth pixel. The first surrounding depth pixels and the second surrounding depth pixels of the target depth pixel may be the same pixels. It should be noted that without being limited to one, the second pixel number may be appropriately set according to, for example, the type of the object group (e.g., the type of the upward growing crops).

The invalid second surrounding depth pixels are depth pixels having anomalous depth-pixel values due to the effects of noise and/or the sunlight, and will not be used in calculation of the normal-line calculation plane.

For instance, determiner 11 calculates the normal-line calculation plane on the basis of the average depth-pixel value associated with the target depth pixel, the position of the target depth pixel in the depth image (i.e., the 3D point of the target depth pixel), the average depth-pixel values associated with the valid second surrounding depth pixels (e.g., the depth pixels to the left, to the lower left, to the right, and to the upper right of the target depth pixel illustrated in FIG. 6), and the positions of the valid second surrounding depth pixels in the depth image. When there are three or more valid second surrounding depth pixels, the equation of the normal-line calculation plane can be obtained by the least squares method.

In the case where the plane relative to k 3D points ($p_1$, $p_2$, ..., $p_k$) is calculated, when the k points are strictly on the plane, the plane normal vector is defined as n, and the plane passing point is defined as c, the following Expression 1 is established.

[Math. 1]

$$\sum_{i=1}^{k}((p_i - c)^T n)^2 = 0 \qquad \text{(Expression 1)}$$

However, since the situation where all of the k points are on the plane rarely occurs, the left-side value of Expression 1 is greater than 0. Thus, a plane having plane normal vector n with which the left-side value of Expression 1 is closest to 0 is treated as an approximate plane. Thus, it is possible to use the least squares method in calculation of the plane normal vector. When 3-by-n matrix A is defined as the following Expression 2, the left side of Expression 1 can be expressed as the following Expression 3.

[Math. 2]

$$A^T = \begin{bmatrix} p_1 - c & p_2 - c & \cdots p_k - c \end{bmatrix} \qquad \text{(Expression 2)}$$

[Math. 3]

$$\min_{\|n\|=1} \|An\|_2^2 \qquad \text{(Expression 3)}$$

The minimization problem can be solved using the singular value decomposition.

When there are two valid second surrounding depth pixels, a normal line can be calculated from the outer product of the 3D points of the target depth pixel and the two valid second surrounding depth pixels. However, the effects of an outlier are large in this case.

It should be noted that when the plurality of second surrounding depth pixels do not include a valid second surrounding depth pixel or include one valid second surrounding depth pixel, a normal line cannot be calculated. This is because it is not possible to calculate a normal-line calculation plane or an outer product by using only the 3D point of the target depth pixel or only the two 3D points: the 3D point of the target depth pixel and the 3D point of the one valid second surrounding depth pixel.

In FIG. 3B, determiner 11 determines whether it is possible to calculate a normal line (step S105). When it is not possible to calculate a normal line (No in step S105), determiner 11 determines the target depth pixel as an obstruction candidate pixel (step S102). This is because it is not possible to make a determination as to whether to determine the target depth pixel as an exclusion depth pixel and an obstruction may be present at the position corresponding to the target depth pixel.

When a normal line can be calculated (Yes in step S105), determiner 11 determines whether the angle formed by the calculated normal line and the normal line of a predetermined reference plane is smaller than or equal to a predetermined angle (step S106). The normal line of the predetermined reference plane is, for example, the normal line of the ground on which the group of upward growing crops grow. For instance, determiner 11 may calculate the normal line of the ground on the basis of an average value (an average depth-pixel value) associated with a depth pixel corresponding to the ground and an average value (an average depth-pixel value) associated with each of a plurality of second surrounding depth pixels (e.g., valid second surrounding depth pixels). Alternatively, determiner 11 may calculate the normal line of the ground by using, for example, a sensor capable of obtaining the normal line of the ground, such as a tilt sensor included in, for example, the farm machine or the construction machine. The predetermined angle may be appropriately set according to, for example, the type of the object group (e.g., the type of the upward growing crops). When the angle formed by the calculated normal line and the normal line of the predetermined reference plane is smaller than or equal to the predetermined angle, the surrounding portion of the target depth pixel is approximately parallel to the predetermined reference plane, and there is a high possibility of an obstruction not being present. When the angle formed by the calculated normal line and the normal line of the predetermined reference plane is greater than the predetermined angle, the surrounding portion of the target depth pixel is inclined relative to the predetermined reference plane, and an obstruction may be present.

When determining that the angle formed by the calculated normal line and the normal line of the predetermined reference plane is smaller than or equal to the predetermined angle (Yes in step S106), determiner 11 determines the target depth pixel as an exclusion depth pixel (step S107). As described above, since, in this case, there is a high possibility of an obstruction not being present, the target depth pixel is excluded from the obstruction candidate pixels. When determining that the angle formed by the calculated normal line and the normal line of the predetermined reference plane is greater than the predetermined angle (No in step S106), determiner 11 determines the target depth pixel as an obstruction candidate pixel (step S102). As described above, since, in this case, an obstruction may be present, the target depth pixel is not excluded from the obstruction candidate pixels.

In this way, determiner 11 determines the exclusion depth pixel to be excluded from the obstruction candidate pixels.

In FIG. 3A, detector 12 detects an obstruction on the basis of the remaining depth pixels after the one or more exclusion depth pixels have been excluded from the plurality of depth pixels (step S12: obstruction detection step). For instance, detector 12 detects whether there is an obstruction and detects the type of the obstruction, by using the density of the cloud of the 3D points of the remaining depth pixels and the luminance values, which have been used in calculation of the depths, of the remaining depth pixels. For instance, detector 12 may regard point clouds close to each other in distance as the same object, merge (cluster) the point clouds, and detect, as an obstruction, a cluster in which the number of the point clouds is greater than or equal to a certain value. In addition, detector 12 may detect an obstruction by using, for example, an image (which may be a black-and-white image) captured by a camera and an image recognition algorithm using the image.

As described above, when determining an exclusion depth pixel to be excluded from the obstruction candidate pixels, the average depth-pixel value of the depth-pixel value of a target depth pixel (each of the plurality of depth pixels is treated as the target depth pixel) and the depth-pixel values of the plurality of first surrounding depth pixels of the target depth pixel is calculated, and a normal line for determining the exclusion depth pixel is calculated. That is, the depth-pixel values of depth pixels corresponding to an uneven portion are averaged, which brings the uneven portion closer to being flat (in other words, the angle formed by the calculated normal line and the normal line of the predetermined reference plane becomes smaller than or equal to the predetermined angle). Thus, it is possible to exclude the uneven portion from the obstruction candidate pixels. It should be noted that there is a large difference between the depth-pixel values of depth pixels corresponding to a spot where, for example, a person is present and the depth-pixel values of depth pixels corresponding to a spot where, for example, a person is not present. As such, even if the depth-pixel values of the depth pixels corresponding to the spot where, for example, the person is present are averaged, the averaged value is likely to be an outlier, and the angle formed by the calculated normal line and the normal line of the predetermined reference plane is less likely to be an angle smaller than or equal to the predetermined angle. Thus, it is possible to avoid excluding the depth pixels corresponding to the spot where, for example, the person is present from the obstruction candidate pixels. Accordingly, it is possible to accurately detect an obstruction in the object group having an irregular plane that is generally flat but partially uneven.

The example in which an exclusion depth pixel is determined using the depth-pixel values of depth pixels is described above. However, this is just an example. Hereinafter, an example in which an exclusion depth pixel is determined using the coordinate values of depth pixels calculated from the depth-pixel values of the depth pixels is described.

When the target depth pixel is a valid depth pixel, determiner 11 calculates the average coordinate value of one coordinate value out of three-dimensional coordinate values obtained through point cloud transformation of the depth-pixel value of the target depth pixel and one coordinate value out of three-dimensional coordinate values obtained through the point cloud transformation of the depth-pixel value of each of a plurality of first surrounding depth pixels within the first pixel number from the target depth pixel, and associates the calculated average coordinate value with the target depth pixel. For instance, the three-dimensional coordinate values are an x-coordinate value, a y-coordinate value, and a z-coordinate value in the world coordinate system. For instance, the x-coordinate value and the y-coordinate value are coordinate values in horizontal directions, and the z-coordinate value is a coordinate value in a vertical direction. The origin is the position on the ground vertically below the depth sensor. That is, the z-coordinate value is a coordinate value corresponding to a height. For instance, determiner 11 can calculate the three-dimensional coordinate values of the target depth pixel by performing the point cloud transformation using the position of the target depth pixel in the depth image, the depth-pixel value of the target depth pixel (the distance from the depth sensor), the angle of the optical-axis direction of the depth sensor, and the height from the ground, at which the depth sensor is positioned. One coordinate value out of the three-dimensional coordinate values is a coordinate value corresponding to a height, that is, a z-coordinate value.

For instance, determiner 11 calculates the average coordinate value of the z-coordinate value of the target depth pixel and the z-coordinate value of each of one or more first surrounding depth pixels in which a difference in the z-coordinate value from the target depth pixel is lower than or equal to a predetermined threshold among the plurality of first surrounding depth pixels, and associates the calculated average coordinate value with the target depth pixel. For instance, the depth-pixel value and the average depth-pixel value described above with reference to FIGS. 4 and 5 can be replaced with the z-coordinate value and the average coordinate value, respectively.

Determiner 11 calculates a normal line on the basis of the average coordinate value associated with the target depth pixel and an average coordinate value associated with each of the plurality of second surrounding depth pixels within the second pixel number from the target depth pixel. An average coordinate value is calculated for each of the plurality of second surrounding depth pixels as with the target depth pixel, and the calculated average coordinate value is associated with the second surrounding depth pixel. For instance, determiner 11 calculates a normal-line calculation plane on the basis of the average coordinate value associated with the target depth pixel and an average coordinate value associated with each of valid second surrounding depth pixels among the plurality of second surrounding depth pixels, and calculates the normal line of the calculated normal-line calculation plane.

For instance, determiner 11 calculates the normal-line calculation plane on the basis of the average coordinate value associated with the target depth pixel, the three-dimensional coordinate values (position) of the target depth pixel, the average coordinate values associated with the valid second surrounding depth pixels (e.g., the depth pixels to the left, to the lower left, to the right, and to the upper right of the target depth pixel illustrated in FIG. 6) and the three-dimensional coordinate values (positions) of the valid second surrounding depth pixels. The details of the method of calculating a normal line are the same as the details of the method of determining an exclusion depth pixel by using the depth-pixel values of depth pixels. Thus, explanations are omitted.

Determiner 11 determines whether it is possible to calculate a normal line, and when it is not possible to calculate a normal line, determiner 11 determines the target depth pixel as an obstruction candidate pixel.

When it is possible to calculate a normal line, determiner 11 determines whether the angle formed by the calculated normal line and the normal line of the predetermined reference plane is smaller than or equal to the predetermined angle. The normal line of the predetermined reference plane is, for example, the normal line of the ground on which the group of upward growing crops grow. For instance, determiner 11 may calculate the normal line of the ground on the basis of an average coordinate value associated with a depth pixel corresponding to the ground and an average coordinate value associated with each of the plurality of second surrounding depth pixels (e.g., the valid second surrounding depth pixels). Alternatively, determiner 11 may calculate the normal line of the ground by using, for example, a sensor capable of obtaining the normal line of the ground, such as a tilt sensor included in, for example, the farm machine or the construction machine.

When determining that the angle formed by the calculated normal line and the normal line of the predetermined reference plane is smaller than or equal to the predetermined angle, determiner 11 determines the target depth pixel as an exclusion depth pixel.

Thus, determiner 11 may determine the exclusion depth pixel to be excluded from the obstruction candidate pixels, by using the coordinate values of depth pixels calculated from the depth-pixel values of the depth pixels.

As described above, when determining an exclusion depth pixel to be excluded from the obstruction candidate pixels, the average coordinate value of the coordinate value (e.g., z-coordinate value) of a target depth pixel (each of the plurality of depth pixels is treated as the target depth pixel) and the coordinate values (e.g., z-coordinate values) of the plurality of first surrounding depth pixels of the target depth pixel is calculated, and a normal line for determining the exclusion depth pixel is calculated using the calculated average coordinate value. That is, the coordinate values of depth pixels corresponding to an uneven portion are averaged, which brings the uneven portion closer to being flat (in other words, the angle formed by the calculated normal line and the normal line of the predetermined reference plane becomes smaller than or equal to the predetermined angle). Thus, it is possible to exclude the uneven portion from the obstruction candidate pixels. It should be noted that there is a large difference between the coordinate values of depth pixels corresponding to a spot where, for example, a person is present and the coordinate values of depth pixels corresponding to a spot where, for example, a person is not present. As such, even if the coordinate values of the depth pixels corresponding to the spot where, for example, the person is present are averaged, the averaged coordinate value is likely to be an outlier, and the angle formed by the calculated normal line and the normal line of the predetermined reference plane is less likely to be an angle smaller than or equal to the predetermined angle. Thus, it is possible to avoid excluding the depth pixels corresponding to the spot where, for example, the person is present from the obstruction candidate pixels. Accordingly, it is possible to accurately detect an obstruction in the object group having an irregular plane that is generally flat but partially uneven.

[Other Embodiments]

The obstruction detection method and obstruction detection device 10 according to one aspect or aspects of the present disclosure are described above. However, the present disclosure is not limited to the embodiment. The one aspect or the aspects of the present disclosure may include, within the scope of the present disclosure, an embodiment obtained by making various changes envisioned by those skilled in the art to each embodiment and an embodiment obtained by combining constituent elements described in different embodiments.

For instance, in the embodiment, the example is described in which the average depth-pixel value of the depth-pixel value of the target depth pixel and the depth-pixel value of each of one or more first surrounding depth pixels in which a difference in the depth-pixel value from the target depth pixel is lower than or equal to the predetermined threshold among the plurality of first surrounding depth pixels is calculated. However, this is just an example. For instance, the average depth-pixel value may be calculated using also the depth-pixel value(s) of the first surrounding depth pixel(s) in which a difference in the depth-pixel value from the target depth pixel is not lower than or equal to the predetermined threshold.

For instance, in the embodiment, the example is described in which the average coordinate value of the coordinate value (e.g., z-coordinate value) of the target depth pixel and the coordinate value of each of one or more first surrounding depth pixels in which a difference in the coordinate value from the target depth pixel is lower than or equal to the predetermined threshold among the plurality of first surrounding depth pixels is calculated. However, this is just an example. For instance, the average coordinate value may be calculated using also the coordinate value(s) of the first surrounding depth pixel(s) in which a difference in the coordinate value from the target depth pixel is not lower than or equal to the predetermined threshold.

For instance, the present disclosure can be embodied as a program for causing a processor to execute the steps included in the obstruction detection method. Furthermore, the present disclosure can be embodied as a non-transitory computer-readable recording medium, such as CD-ROM in which the program is stored.

For instance, when the present disclosure is achieved as a program (software), each step is performed as a result of execution of the program with the use of hardware resources such as the CPU, memory, and input/output circuit of a computer. That is, each step is performed by the CPU obtaining data from, for example, the memory or the input/output circuit, performing an operation, and outputting an operation result to, for example, the memory or the input/output circuit.

It should be noted that in the embodiment, each of the constituent elements of obstruction detection device 10 may be dedicated hardware or may be achieved by executing a software program suitable for the constituent element. The constituent element may be achieved by a program executer, such as a CPU or a processor, reading and executing a software program stored in a recording medium, such as a hard disk or semiconductor memory.

Some or all of the functions of obstruction detection device 10 according to the embodiment are typically embodied as LSIs, which are integrated circuits. Some or all of the functions may be made as individual chips, or some or all of the functions may be incorporated into one chip. Furthermore, integration may be achieved not only as an LSI but also as a dedicated circuit or a general-purpose processor. A field programmable gate array (FPGA) that can be programmed after manufacturing an LSI or a reconfigurable processor in which connections and settings of circuit cells inside an LSI can be reconfigured may be used.

Furthermore, the present disclosure includes, within the scope of the present disclosure, variations obtained by making changes envisioned by those skilled in the art to the embodiment in the present disclosure.

[Industrial Applicability]

The present disclosure is applicable to, for example, a device that detects an obstruction in a place such as an agricultural field.

[Reference Signs List]

10 obstruction detection device
11 determiner
12 detector

**Claims**

1. An obstruction detection method for detecting an obstruction, the obstruction detection method comprising:

determining an exclusion depth pixel to be excluded from obstruction candidate pixels among a plurality of depth pixels of a depth image obtained by sensing, using a depth sensor, an object group having an irregular plane; and
detecting an obstruction, based on one or more depth pixels other than the exclusion depth pixel among the plurality of depth pixels, wherein
the determining includes performing, for each of the plurality of depth pixels, the following:

processing (i) for calculating an average value related to the depth pixel, based on a depth-pixel value of the depth pixel and a depth-pixel value of each of a plurality of first surrounding depth pixels within a first pixel number from the depth pixel, and associating the average value with the depth pixel, the first pixel number indicating a predetermined number of pixels;
processing (ii) for calculating a normal line, based on the average value associated with the depth pixel and an average value associated with each of a plurality of second surrounding depth pixels within a second pixel number from the depth pixel, the second pixel number indicating a predetermined number of pixels;
processing (iii) for determining whether an angle formed by the normal line calculated and a normal line of a predetermined reference plane is smaller than or equal to a predetermined angle; and

processing (iv) for determining the depth pixel as the exclusion depth pixel when the angle is determined to be smaller than or equal to the predetermined angle.

2. The obstruction detection method according to claim 1, wherein

in the processing (i), an average depth-pixel value of the depth-pixel value of the depth pixel and the depth-pixel value of each of the plurality of first surrounding depth pixels within the first pixel number from the depth pixel is calculated, and the average depth-pixel value is associated with the depth pixel, and
in the processing (ii), the normal line is calculated based on the average depth-pixel value associated with the depth pixel and an average depth-pixel value associated with each of the plurality of second surrounding depth pixels within the second pixel number from the depth pixel.

3. The obstruction detection method according to claim 2, wherein
in the processing (i), an average depth-pixel value of the depth-pixel value of the depth pixel and a depth-pixel value of each of one or more first surrounding depth pixels in which a difference in the depth-pixel value from the depth pixel is lower than or equal to a predetermined threshold among the plurality of first surrounding depth pixels is calculated, and the average depth-pixel value is associated with the depth pixel.

4. The obstruction detection method according to claim 2 or 3, wherein
in the processing (ii), the normal line is calculated based on the average depth-pixel value associated with the depth pixel and an average depth-pixel value associated with each of valid second surrounding depth pixels among the plurality of second surrounding depth pixels.

5. The obstruction detection method according to claim 4, wherein
when the plurality of second surrounding depth pixels do not include a valid second surrounding depth pixel or include one valid second surrounding depth pixel, the depth pixel is determined as an obstruction candidate pixel.

6. The obstruction detection method according to claim 1, wherein

in the processing (i), an average coordinate value of a coordinate value out of three-dimensional coordinate values obtained through point cloud transformation of the depth-pixel value of the depth pixel and a coordinate value out of three-dimensional coordinate values obtained through the point cloud transformation of the depth-pixel value of each of the plurality of first surrounding depth pixels within the first pixel number from the depth pixel is calculated, and the average coordinate value is associated with the depth pixel, and
in the processing (ii), the normal line is calculated based on the average coordinate value associated with the depth pixel and an average coordinate value associated with each of the plurality of second surrounding depth pixels within the second pixel number from the depth pixel.

7. The obstruction detection method according to claim 6, wherein
in the processing (i), an average coordinate value of the coordinate value of the depth pixel and the coordinate value of each of one or more first surrounding depth pixels in which a difference in the coordinate value from the depth pixel is lower than or equal to a predetermined threshold among the plurality of first surrounding depth pixels is calculated, and the average coordinate value is associated with the depth pixel.

8. The obstruction detection method according to claim 6 or 7, wherein
in the processing (ii), the normal line is calculated based on the average coordinate value associated with the depth pixel and an average coordinate value associated with each of valid second surrounding depth pixels among the plurality of second surrounding depth pixels.

9. The obstruction detection method according to claim 8, wherein
when the plurality of second surrounding depth pixels do not include a valid second surrounding depth pixel or include one valid second surrounding depth pixel, the depth pixel is determined as an obstruction candidate pixel.

10. The obstruction detection method according to any one of claims 1 to 9, wherein
the object group has the irregular plane which includes an uneven portion formed by an edge of a group of upward growing crops.

11. The obstruction detection method according to claim 10, wherein

the normal line of the predetermined reference plane is a normal line of a ground on which the group of upward growing crops grow.

12. The obstruction detection method according to claim 11, further comprising:
calculating the normal line of the ground, based on an average value associated with the depth pixel corresponding to the ground and the average value associated with each of the plurality of second surrounding depth pixels, or obtaining the normal line of the ground by using a sensor capable of obtaining the normal line of the ground.

13. A program for causing a computer to execute the obstruction detection method according to any one of claims 1 to 12.

14. An obstruction detection device that detects an obstruction, the obstruction detection device comprising:

a determiner that determines an exclusion depth pixel to be excluded from obstruction candidate pixels among a plurality of depth pixels of a depth image obtained by sensing, using a depth sensor, an object group having an irregular plane; and
a detector that detects an obstruction, based on one or more remaining depth pixels after the exclusion depth pixel has been excluded from the plurality of depth pixels, wherein
the determiner performs, for each of the plurality of depth pixels, the following:

processing (i) for calculating an average value related to the depth pixel, based on a depth-pixel value of the depth pixel and a depth-pixel value of each of a plurality of surrounding depth pixels within a predetermined number of pixels from the depth pixel, and associating the average value with the depth pixel;
processing (ii) for calculating a normal line, based on the average value associated with the depth pixel and an average value associated with each of a plurality of surrounding depth pixels within a predetermined number of pixels from the depth pixel;
processing (iii) for determining whether an angle formed by the normal line calculated and a normal line of a predetermined reference plane is smaller than or equal to a predetermined angle; and
processing (iv) for determining the depth pixel as the exclusion depth pixel when the angle is determined to be smaller than or equal to the predetermined angle.

# FIG. 1

FIG. 2

# FIG. 3A

```
        ╭─────────╮
        │  Start  │
        ╰────┬────╯
             │              ╭S11
             ▼
   ┌┌──────────────────┐┐
   ││ Determine exclusion││
   ││ depth pixel        ││
   └└──────────────────┘┘
             │              ╭S12
             ▼
   ┌────────────────────┐
   │ Detect obstruction on the │
   │ basis of depth pixels other │
   │ than exclusion depth pixel │
   └────────────────────┘
             │
             ▼
        ╭─────────╮
        │   End   │
        ╰─────────╯
```

# FIG. 3B

```
                    ┌─────────────┐
                    │    Start    │
                    └─────────────┘
                           │
                           ▼                    S101
         ◄───────────────────────────────────┐      No
         │  Target depth pixel is valid?     ├──────────────┐
         └───────────────────────────────────┘              │
                           │ Yes      S103                   │
                           ▼                                 │
              ┌─────────────────────────┐                   │
              │  Calculate average value │                   │
              │  related to target depth │                   │
              │  pixel and associate     │                   │
              │  calculated average value│                   │
              │  with target depth pixel │                   │
              └─────────────────────────┘                   │
                           │            S104                 │
                           ▼                                 │
              ┌─────────────────────────┐                   │
              │  Calculate normal line   │                   │
              └─────────────────────────┘                   │
                           │            S105                 │
                           ▼                          No     │
         ◄───────────────────────────────────┐              │
         │  Normal line can be calculated?   ├──────────────┤
         └───────────────────────────────────┘              │
                           │ Yes      S106                   │
                           ▼                                 │
              ┌─────────────────────────┐                   │
              │     Angle formed by      │                   │
              │  calculated normal line  │          No       │
              │  and normal line of      ├──────────────────►│
              │  predetermined reference │                   │
              │  plane is smaller than or│                   │
              │  equal to predetermined  │                   │
              │          angle?          │                   │
              └─────────────────────────┘                   │
                           │ Yes      S107          S102     ▼
              ┌─────────────────────────┐  ┌─────────────────────────┐
              │  Determine target depth  │  │  Determine target depth  │
              │  pixel as exclusion depth│  │  pixel as obstruction    │
              │          pixel           │  │  candidate pixel         │
              └─────────────────────────┘  └─────────────────────────┘
                           │                          │
                           ◄──────────────────────────┘
                           ▼
                    ┌─────────────┐
                    │     End     │
                    └─────────────┘
```

EP 4 485 356 A1

# FIG. 4

| 150 | 200 | 45 |
|-----|-----|-----|
| 50 | 40 | 35 |
| 120 | 65535 | 110 |

FIG. 5

FIG. 6

## INTERNATIONAL SEARCH REPORT

| International application No. |
| --- |
| **PCT/JP2023/004859** |

### A. CLASSIFICATION OF SUBJECT MATTER

***G06T 7/64*** (2017.01)i; ***G06T 7/70*** (2017.01)i
FI: G06T7/64; G06T7/70 A

According to International Patent Classification (IPC) or to both national classification and IPC

### B. FIELDS SEARCHED

Minimum documentation searched (classification system followed by classification symbols)

G06T7/64; G06T7/70

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
| --- | --- | --- |
| Y | JP 2021-85828 A (TOYOTA INDUSTRIES CORP.) 03 June 2021 (2021-06-03) paragraphs [0005], [0016], [0023], [0027], [0032], [0033] | 1-2, 4-6, 8-14 |
| A | | 3, 7 |
| Y | JP 2011-186749 A (OPTEX CO., LTD.) 22 September 2011 (2011-09-22) paragraphs [0025], [0026], [0030], [0035]-[0040] | 1-2, 4-6, 8-14 |
| Y | JP 2021-7386 A (KUBOTA CORP.) 28 January 2021 (2021-01-28) paragraphs [0051]-[0054] | 10-12 |

☐ Further documents are listed in the continuation of Box C.   ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **10 April 2023** | **18 April 2023** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (January 2015)

INTERNATIONAL SEARCH REPORT
Information on patent family members

International application No.

**PCT/JP2023/004859**

| Patent document cited in search report | | | Publication date (day/month/year) | Patent family member(s) | Publication date (day/month/year) |
|---|---|---|---|---|---|
| JP | 2021-85828 | A | 03 June 2021 | (Family: none) | |
| JP | 2011-186749 | A | 22 September 2011 | US 2011/0216213 A1 paragraphs [0040], [0041], [0045], [0050]-[0055] EP 2372652 A1 | |
| JP | 2021-7386 | A | 28 January 2021 | WO 2020/262416 A1 CN 113923977 A KR 10-2022-0027811 A | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2020524330 W